(19) **Europäisches Patentamt**
**European Patent Office**
**Office européen des brevets**

(11) **EP 4 195 673 B1**

(12) **EUROPEAN PATENT SPECIFICATION**

(45) Date of publication and mention
of the grant of the patent:
**19.02.2025 Bulletin 2025/08**

(51) International Patent Classification (IPC):
**H04N 21/434** (2011.01)    **H04N 21/8547** (2011.01)
**H04N 21/43** (2011.01)

(21) Application number: **21212735.1**

(52) Cooperative Patent Classification (CPC):
**H04N 21/4344; H04N 21/43072; H04N 21/8547**

(22) Date of filing: **07.12.2021**

(54) **SYNCHRONIZATION OF MEDIA STREAMS**

SYNCHRONISIERUNG VON MEDIENSTRÖMEN

SYNCHRONISATION DE FLUX DE MÉDIA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023 Bulletin 2023/24**

(73) Proprietor: **MediaTek Singapore Pte Ltd
Singapore 138628 (SG)**

(72) Inventors:
• **Wang, Kling**
**Hefei (CN)**
• **Xu, JiangTao**
**Hefei (CN)**
• **Li, Qichao**
**Hefei (CN)**

(74) Representative: **Habermann, Hruschka &
Schnabel
Patentanwälte
Montgelasstraße 2
81679 München (DE)**

(56) References cited:
**WO-A1-2008/055420    US-A1- 2021 235 135**

• **BORONAT FERNANDO ET AL: "HbbTV-
Compliant Platform for Hybrid Media Delivery
and Synchronization on Single- and Multi-Device
Scenarios", IEEE TRANSACTIONS ON
BROADCASTING, IEEE SERVICE CENTER,
PISCATAWAY, NJ, US, vol. 64, no. 3, 1 September
2018 (2018-09-01), pages 721 - 746, XP011688203,
ISSN: 0018-9316, [retrieved on 20180807], DOI:
10.1109/TBC.2017.2781124**

**Description**

**BACKGROUND OF THE INVENTION**

**Field of the Invention**

The present invention relates to multimedia synchronization, and, in particular, to an apparatus and a method for synchronizing media streams.

**Description of the Related Art**

HBBTV (Hybrid Broadcast Broadband TV) is a content distribution platform compatible with DVB (Digital Video Broadcasting), which can provide signaling, transmission, and presentation mechanisms for enhancing the interactivity of TV services. With rapid development of HBBTV, the configuration of HBBTV is becoming more and more powerful, and the application is more and more complete. For example, a multimedia playback apparatus supporting the HBBTV standard can be connected to the DVB broadcasting network to receive broadcast video content, and can also be connected to the Internet through a broadband interface, which allows the multimedia playback apparatus to receive audio content from the Internet.

From BORONAT FERNANDO ET AL: "HbbTV-Compliant 1-14 Platform for Hybrid Media Delivery and Synchronization on Single- and Multi-Device Scenarios", IEEE TRANSACTIONS ON BROADCASTING, IEEE SERVICE CENTER, PISCATAWAY, NJ, US, vol. 64, no. 3, 1 September 2018 (2018-09-01), pages 721-746, an end-to-end HbbTV-compliant platform for the preparation. (adaptive) delivery and synchronized playout of related hybrid (broadcast and broadband) contents is known.

From US 2021/235135 A1 an apparatus for supporting hybrid broadcasting in a digital broadcasting system is known.

From WO 2008/055420 A1 a synchronization method between media streams from different networks is known.

Since the synchronization accuracy for audio/video synchronization timing for a given terminal required by the HBBTV 2.0.1 standard is 10ms, it is challenging to design a multimedia playback apparatus to satisfy the timing requirement.

**BRIEF SUMMARY OF THE INVENTION**

The present invention is defined by the subject matter of the appended claims.

An embodiment of the present invention provides a multimedia playback apparatus. The multimedia playback apparatus includes a non-volatile memory (130) and a processor (110). The non-volatile memory (130) stores an analyzing program (131), a first driver (132), and a second driver (133). The processor (110) executes the analyzing program (131), the first driver (132), and the second driver (133) to perform the following steps:

obtaining Motion Picture Expert Group, MPEG, Transport Streams, TS, comprising a video stream (11) and an audio stream (21) from a first source terminal (10) and a second source terminal (20), respectively; parsing a first packet in the video stream (11) to obtain a first presentation timestamp, PTS, referred to as video PTS, and parsing a second packet, that corresponds to the first packet, in the audio stream (21) to obtain a second PTS, referred to as audio PTS, wherein the first source terminal (10) is a broadcast source, and the second source terminal (20) is a broadband source; wherein the processor (110) obtains the video PTS and the audio PTS from a first PTS header of the first packet and a second PTS header of the second packet, respectively, wherein the processor (110), executing the analyzing program (131), the first driver (132), and the second driver (133) is further adapted to perform the following steps: converting the video PTS on the video PTS timeline (z) into a corresponding video Timed External Media Information, TEMI, on a video TEMI timeline (x) with reference to the video PTS timeline (z), converting the video TEMI into an audio TEMI on an audio TEMI timeline (y), wherein converting the video TEMI into the audio TEMI comprises using additional video and audio TEMI time data and a predefined point of correlation on the video TEMI timeline (x) and the audio TEMI timeline (y), respectively; and converting the audio TEMI into a corresponding audio PTS, C_APTS, on an audio PTS timeline (w); and to further perform the following steps:

modifying the second packet by replacing the audio PTS with the converted PTS, C_APTS, in the second packet to generate a modified second packet; decoding the first packet and the modified second packet by the first driver and the second driver to generate video content and audio content, respectively; and forwarding the first packet to the first driver, and forwarding the modified second packet with the converted PTS, C_APTS, and the video PTS to the second driver; thereby synchronizing the audio content with the video content by the second driver using the converted PTS, C_APTS, and the video PTS.

Another embodiment of the present invention provides a computer-implemented method for synchronizing media streams. The method includes the following steps:

obtaining Motion Picture Expert Group, MPEG, Transport Streams, TS, comprising a video stream (11) and an audio stream (21) from a first source terminal (10) and a second source terminal (20), respectively; parsing a first packet in the video stream (11) to obtain a first presentation timestamp, PTS, referred to as video PTS, and parsing a second packet, that corresponds to the first packet, in the audio stream (21) to obtain a second PTS, referred to as audio PTS, wherein the first source terminal (10) is a broadcast source, and the second source terminal (20) is a broadband source; wherein the processor (110) obtains the video PTS and the audio PTS from a first PTS header of the first packet and a second PTS header of the second packet, respectively, wherein by the processor (110), executing the analyzing program (131), the first driver (132), and the second driver (133) is further adapted to perform the following steps: converting the video PTS on the video PTS timeline (z) into a corresponding video Timed External Media Information, TEMI, on a video TEMI timeline (x) with reference to the video PTS timeline (z), converting the video TEMI into an audio TEMI on an audio TEMI timeline (y), wherein converting the video TEMI into the audio TEMI comprises using additional video and audio TEMI time data and a predefined point of correlation on the video TEMI timeline (x) and the audio TEMI timeline (y), respectively; and converting the audio TEMI into a corresponding audio PTS, C_APTS, on an audio PTS timeline (w); and to further perform the following steps:

modifying the second packet by replacing the audio PTS with the converted PTS, C_APTS, in the second packet to generate a modified second packet; decoding the first packet and the modified second packet by the first driver and the second driver to generate video content and audio content, respectively; and forwarding the first packet to the first driver, and forwarding the modified second packet with the converted PTS, C_APTS, and the video PTS to the second driver; thereby synchronizing the audio content with the video content by the second driver using the converted PTS, C_APTS, and the video PTS.

## BRIEF DESCRIPTION OF THE DRAWINGS

The present invention can be more fully understood by reading the subsequent detailed description and examples with references made to the accompanying drawings, wherein:

FIG. 1 is a diagram of a multimedia playback apparatus in accordance with an embodiment of the invention;
FIG. 2 is a diagram of the data flow for processing the input media streams in accordance with an embodiment of the invention;
FIG. 3 is a diagram of the format of a TS packet in accordance with an embodiment of the invention;
FIG. 4A is a diagram showing the mapping relationship between a video PTS and a video TEMI in accordance with an embodiment of the invention;
FIG. 4B is a diagram showing the mapping relationship between a video TEMI and an audio TEMI in accordance with an embodiment of the invention;
FIG. 4C is a diagram showing the mapping relationship between an audio TEMI and an audio PTS in accordance with an embodiment of the invention; and
FIG. 5 is a flow chart of a method for synchronizing media streams in accordance with an embodiment of the invention.

## DETAILED DESCRIPTION OF THE INVENTION

The following description is made for the purpose of illustrating the general principles of the invention and should not be taken in a limiting sense. The scope of the invention is best determined by reference to the appended claims.

The following description is presented to enable one of ordinary skill in the art to make and use the invention, and is provided in the context of a patent application and its requirements. Various modifications to the embodiments and the generic principles and features described herein will be readily apparent to those skilled in the art.

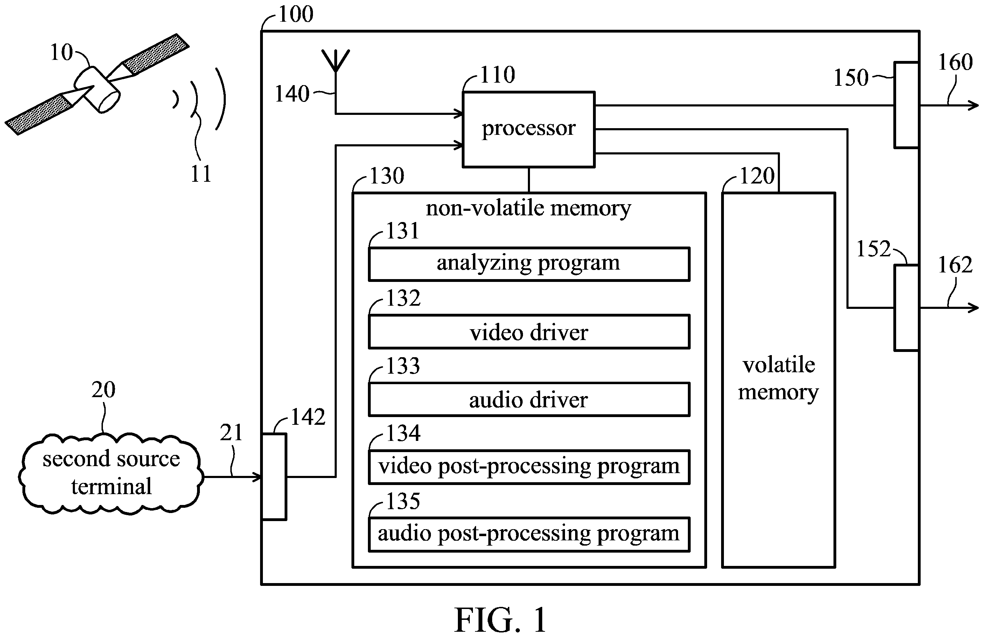

FIG. 1 is a diagram of a multimedia playback apparatus in accordance with an embodiment of the invention.

The multimedia playback apparatus 100 may be a standalone set-top box (STB) or an STB that is integrated into an electronic device such as a smart TV. As depicted in FIG. 1, the multimedia playback apparatus 100 may include a processor 110, a volatile memory 120, a non-volatile memory 130, an antenna 140, a broadband interface 142, a video interface 150, and an audio interface 152.

The processor 110 may be a central processing unit (CPU), a general-purpose processor, etc., but the invention is not limited thereto. The volatile memory 120 may be implemented by a dynamic random access memory (DRAM) or a static random access memory (SRAM), and be used as a workspace of a program and/or driver executed by the processor 110. The non-volatile memory 130 may be a hard-disk driver (HDD), a solid-state disk (SSD), a read-only memory (ROM), a flash memory, etc., but the invention is not limited thereto.

The non-volatile memory 130 may store an analyzing program 131, a video driver 132, an audio driver 133, a video post-processing program 134, and an audio post-processing program 135. The processor 110 may load the analyzing program 131, video driver 132, audio driver 133, the video post-processing program 134, and the audio post-processing program 135 from the non-volatile memory 130 into the volatile memory 120 for execution. For example, the analyzing program 131 may parse the input media streams from different sources and transmit the media streams respectively to the video driver 132 and audio driver 133 for subsequent processing, where details of the analyzing program 131 will be discussed later.

The video post-processing program 134 may perform video post processing on the decoded video images, such as image scaling, deblocking, sharpening/unsharpening, luminance alterations, blurring/denoising, etc., to generate an output video signal, and the multimedia playback apparatus 100 may output the output video signal 160 via the video interface 150. The video interface 150 may be implemented using a VGA (Video Graphics Array), HDMI (High-Definition Multimedia Interface), DisplayPort interface, but the invention is not limited thereto.

The audio post-processing program 135 may perform audio post processing on the decoded audio signal, such as resampling, bandpass filtering, playback equalization, etc., but the invention is not limited thereto, and the multimedia playback apparatus 100 may output the output audio signal 162 via the audio interface 152. The audio interface 152 may be implemented using an analog audio interface (e.g., an RCA, mini-RCA, 3.5mm, 2.5mm plug, etc.) or a digital audio interface (e.g., a USB, HDMI, DisplayPort, SPDIF coaxial, Toslink interface, etc.), but the invention is not limited thereto. In some embodiments, the audio interface 152 and the video interface 150 can be integrated as one interface, such as an HDMI or DisplayPort interface.

For example, media streams are composed of Access Units (AUs), which are also referred to as Media Data Units (MDUs), within various MPEG (Motion Picture Expert Group) standards. An AU is the smallest timestamped media unit in a specific media stream. For example, a video AU is an encoded picture, whereas an audio AU is a set of encoded audio samples. At the server side (e.g., the first source terminal 10 or second source terminal 20), the AUs of each particular media stream are captured, encoded, and timestamped at particular clock rates. Thereafter, the AUs are packetized for transmission over the network or broadcasting. For example, a video stream may have 50 AUs (i.e., 50 frames) in one second, whereas an audio stream may have 1000 AUs (i.e., 1000 samples) in one second.

At the receiver side (e.g., the multimedia playback apparatus 100), the video driver 132 and audio driver 133 may perform de-packetization, decoding, post-processing to enable a reconstruction of original temporal dependences between the access units (AUs) within and between the involved media streams. This end-to-end process for ensuring a proper and smooth media play-out is known as media sync.

In an embodiment, the multimedia playback apparatus 100 may support the HBBTV 2.0 standard or a later-developed revision, which allows the multimedia playback apparatus 100 to receive a first media stream 11 from a first source terminal 10 via the antenna 140, and receive a second media stream 21 from a second source terminal 20 via the broadband interface 142.

The first source terminal 10 may be as a broadcasting source using terrestrial, satellite, mobile, or cable technologies. The second source terminal 20 may be a broadband source from the Internet.

A MPEG Transport Stream may packetize an Elementary Stream (ES) like video, audio or metadata into a Packetized Elementary Stream (PES). Multiple PESs may be multiplexed into a Transport Stream (TS) suitable for storage or transmission. In some embodiments, the first media stream 11 and the second media stream 21 may be MPEG Transport Streams, such as a video stream and an audio stream, respectively.

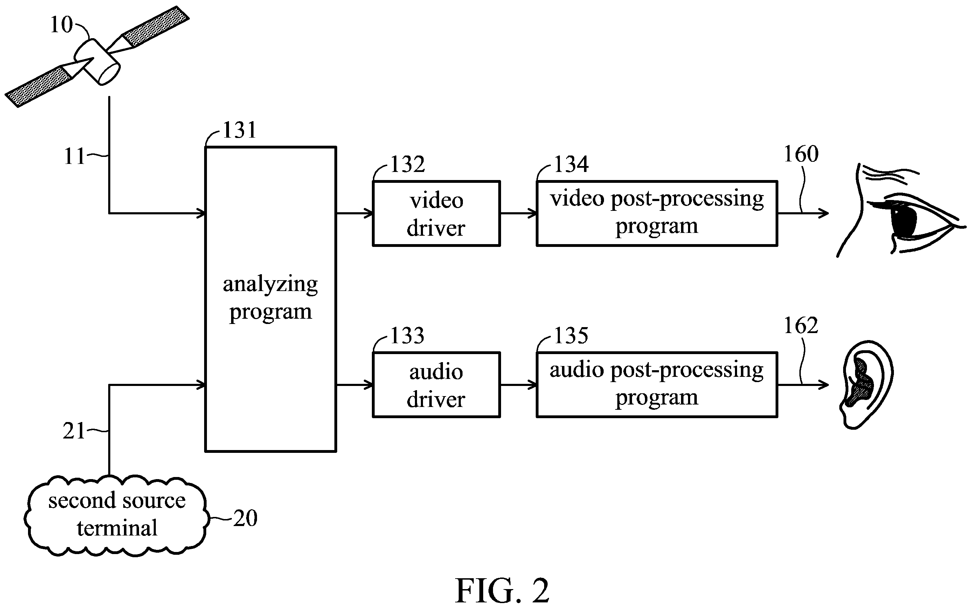

FIG. 2 is a diagram of the data flow for processing the input media streams in accordance with an embodiment of the invention.

Referring to FIG. 1 and FIG. 2, the analyzing program 131 may be a transport layer in the OSI reference model, and may receive the first media stream 11 and the second media stream 21 respectively from the first source terminal 11 and the second source terminal 20. The analyzing program 131 may parse the first media stream 11 to obtain a first PTS for each frame in the first media stream 11, and then forward the first media stream 11 to the video driver 132 for subsequent processing. In addition, the analyzing program 131 may parse the second media stream 21 (i.e., audio stream) to obtain a second PTS (e.g., A_PTS) for each AU.

For example, a PTS carried in a broadcast transport stream refers to the presentation timestamp of a particular access unit of media (e.g., a frame of the video). Similarly, for broadband-delivered content, a timestamp associated with an access unit may refer to the time at which that access unit starts to be presented. A PTS timestamp is encoded in units of 90000ths of a second. MPEG TEMI (Timeline External Media Information) timestamps are encoded in units of ticks with a tick rate that is signaled.

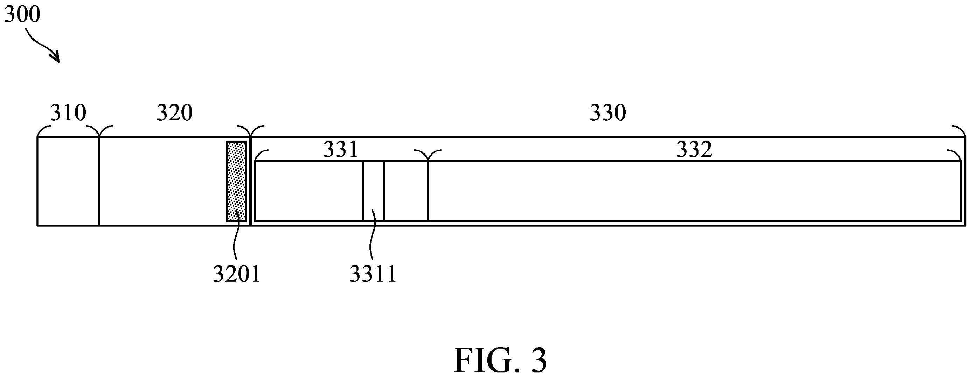

The format of a TS packet in the second media stream 21 is shown in FIG. 3. For example, an MPEG2 TS packet 300 may include a 4-byte TS header 310 followed by 184 bytes shared between the variable-length adaptation field (AF) 320 and the TS packet payload 330. In some embodiments, the AF 320 may include a TEMI descriptor 3201 which describes external data and associated timing. In addition, the TS packet payload 330 may include a PES header 331 and PES payload 332, and the PES header 331 may include a PTS field 3311, which is a 33-bit size (resolution) encoded at a frequency of 90KHz. If the value of the PTS field if 180000, it may indicate a timeline at 2 seconds. It should be noted that the TEMI timeline descriptors are not always present on every PES packet that has PTS.

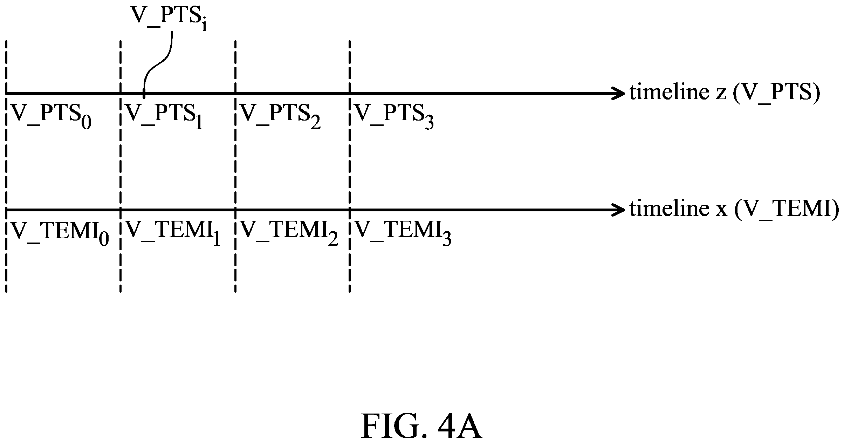

FIG. 4A is a diagram showing the mapping relationship between a video PTS and a video TEMI in accordance with an embodiment of the invention.

In the first media stream, there are pairs of V_TEMI (i.e., referring to video TEMI) and its corresponding V_PTS (i.e., referring to video PTS), such as $\{V\_TEMI_1, V\_PTS_1\}$, $\{V\_TEMI_2, V\_PTS_2\}$, $\{V\_TEMI_3, V\_PTS_3\}$, and so on. For example, if the frame rate of the first media stream 11 is 50 frames per second, there are 50 PTSs in one second.

As shown in FIG. 4A, the timeline z starts from $V\_PTS_0$, and the timeline x starts from $V\_TEMI_0$. When the $V\_PTS_i$ of the currently displayed frame is not located at the same time of any PTS obtained from the first media stream 111, if the pair of $\{V\_TEMI_1, V\_PTS_1\}$ is closest to the $V\_PTS_i$ of the currently displayed frame, the analyzing program 131 can convert the $V\_PTS_i$ of the currently displayed frame into a corresponding $V\_TEMI_i$ of the currently displayed frame using equation (1):

$$\frac{V\_TEMI_i - V\_TEMI_1}{V\_timescale} = \frac{V\_PTS_i - V\_PTS_1}{90000} \qquad (1)$$

where the parameter *V timescale* is a value obtained from the first media stream 11. Accordingly, given that the parameters $V\_PTS_1$, $V\_PTS_i$, $V\_TEMI_1$, and *V timescale* are known, the analyzing program 131 can compute the value of $V\_TEMI_i$ using equation (1).

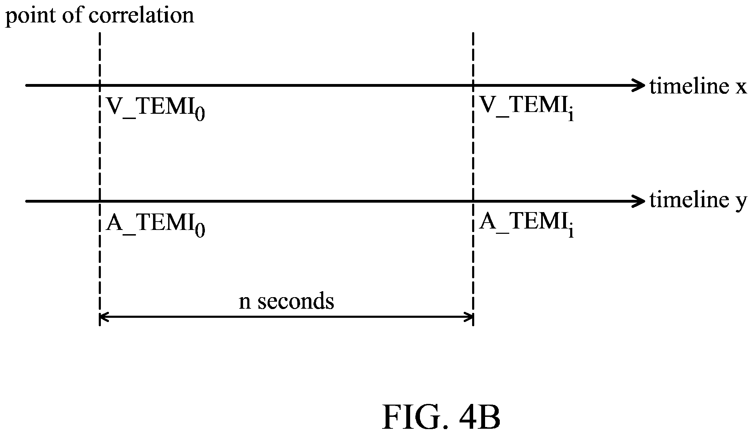

FIG. 4B is a diagram showing the mapping relationship between a video TEMI and an audio TEMI in accordance with an embodiment of the invention.

During decoding of the first media stream 11 and the second media stream 21, a time point of correlation $(V\_TEMI_0, A\_TEMI_0)$, such as the initial time point, can be obtained. For example, the time point $V\_TEMI_0$ refers to a known timeline value (e.g., the initial video timeline value) for the video TEMI, and the time point $A\_TEMI_0$ refers to another known time value (e.g., the initial audio timeline value) for the audio TEMI, where $V\_TEMI_0$ is equal to $A\_TEMI_0$.

As shown in FIG. 4B, when the video frame and audio frame need to align after n seconds, $(V\_TEMI_i - V\_TEMI_0)$ ticks has passed on timeline x, and $(A\_TEMI_i - A\_TEMI_0)$ ticks has passed on timeline y. Thus, the analyzing program 131 may extrapolate the value $A\_TEMI_i$ on the timeline y using the linear relationship of equation (2):

$$A\_TEMI_i = A\_TEMI_0 + (V\_TEMI_i - V\_TEMI_0)\frac{A\_timescale}{V\_timescale} \qquad (2)$$

where the parameters V_timescale and A_timescale are known values obtained from the first media stream 11 and the second media stream 21, respectively. Thus, the analyzing program 131 may perform timeline alignment on the audio TEMI (A_TEMI) with reference to the timeline x (i.e., video TEMI timeline).

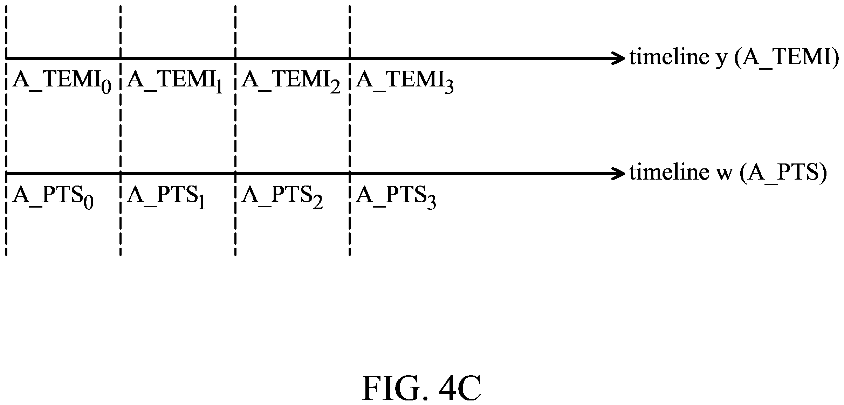

FIG. 4C is a diagram showing the mapping relationship between an audio TEMI and an audio PTS in accordance with an embodiment of the invention.

As depicted in FIG. 4C, the timeline y starts from $A\_TEMI_0$, and the timeline w starts from $A\_PTS_0$. Since the analyzing program 131 may calculate the audio TEMI ($A\_TEMI_i$) from a video PTS ($V\_PTS_i$) of the currently displayed frame using equations (1) and (2), the analyzing program 131 may convert the audio TEMI to the corresponding audio PTS ($C\_APTSi$) using equation (3):

$$\frac{A\_TEMI_i - A\_TEMI_0}{A\_timescale} = \frac{C\_APTS_i}{90000} \qquad (3)$$

where the parameter A_timescale is a known values obtained from the second media stream 21. Accordingly, given that the parameters $A\_TEMI_i$, $A\_TEMI_0$, and *A_timescale* are known, the analyzing program 131 can compute the value of $A\_PTS_i$ using equation (3).

The next paragraphs [0041] and [0042] pertain to an embodiment outside the scope of the claimed invention.

Conversely, given that the value of $A\_PTS_i$ is known, the analyzing program 131 can also compute the value of $V\_PTS_i$ using the linear relationships in equations (1) to (3). For example, the analyzing program 131 may obtain parameters from HBBTV configurations, such as the starting audio TEMI ($A\_TEMI_0$), starting video TEMI ($V\_TEMI_0$), audio timescale (A_timescale), and video timescale (V_timescale), that are used to calculate a converted audio PTS (C_APTS) with reference to the video PTS timeline. The calculation of the converted audio PTS (C_APTS) is shown in equation (4):

$$C\_APTS = \frac{((\frac{A\_PTS}{90000}) \times A\_timescale - A\_TEMI_0) \times \frac{V\_timescale}{A\_timescale} + V\_TEMI_0)}{V\_timescale} \times 90000 \qquad (4)$$

where the parameter A_PTS denotes the PTS obtained from PTS field 3311 of the PES header 331 in the second media stream 21. For example, given that $A\_TEMI_0=29$, $V\_TEMI_0=231$, A_timescale = 1000, V_timescale = 50, and A_PTS = 36976, the analyzing program 131 may calculate that the value of C_APTS is 450090.

In response to the calculation of the converted audio PTS (C_APTS) being completed, the analyzing program 131 may modify the PES packet by replacing the second PTS in the PTS field 3311 with the converted audio PTS (C_APTS), and then send the modified PES packet to the audio driver 133. Thus, the audio driver 133 may perform audio/video synchronization using the converted audio PTS (C_APTS) which is aligned with reference to the video PTS timeline.

Specifically, the audio driver 133 may obtain the converted audio PTS (C_APTS) and the video PTS (V_PTS), and may treat the video stream as a master stream in the audio/video synchronization. For example, the audio driver 133 may perform audio/video synchronization using the following pseudo codes:

$$if(1000 < C\_APTS - V\_PTS )$$
$$\{//audio\ fast$$
$$\quad wait();$$
$$\}$$
$$If(C\_APTS - V\_PTS < -1000)$$
$$\{//audio\ slow$$
$$\quad Audio.\,skip();$$
$$\}$$
$$Else\ if(-1000 \le C\_APTS - V\_PTS \le 1000)$$
$$\{$$
$$\quad Play().$$
$$\}$$

For example, since a PTS is encoded in units of 1/90000 of a second, a PTS value of 1000 units is approximately equal to 10ms. In addition, a latency of 10ms is allowed in the HBBTV 2.0 specification, it indicates that the output audio signal can be behind or ahead of the video signal within an audio/video synchronization tolerance range of 10ms. Specifically, if the converted audio PTS (C_APTS) is ahead of the video PTS (V_PTS) by more than 1000 units (e.g., a first amount of units, which is an adjustable parameter) on the video PTS timeline (e.g., timeline z), it indicates that the converted audio PTS (C_APTS) is not within the audio/video synchronization tolerance range of the video PTS (V_PTS). Thus, the audio driver 133 may wait for a period of time (e.g., C_ATPS - V_TPS) until the actual audio PTS is within the audio/video synchronization tolerance range of the video PTS (V_PTS).

If the converted audio PTS (C_APTS) is behind the video PTS (V_PTS) by more than 1000 units (e.g., a second amount of units, which is an adjustable parameter) on the video PTS timeline, it indicates that the converted audio PTS (C_APTS) is not within the audio/video synchronization tolerance range of the video PTS (V_PTS). Thus, the audio driver 133 may skip the current audio PES packet and fetch the next audio PES packet from the second media stream 21 for subsequent de-packetization, audio decoding and media synchronization.

If the converted audio PTS (C_APTS) is ahead of the video PTS (V_PTS) by less than or equal to the first amount of units on the video PTS timeline or is behind the video PTS (V_PTS) by less than or equal to the second amount of units on the video PTS timeline, it indicates that the converted audio PTS (C_APTS) is within the audio/video synchronization tolerance range of the video PTS (V_PTS). Thus, the audio driver 133 can normally play the audio content decoded from the current audio PES packet.

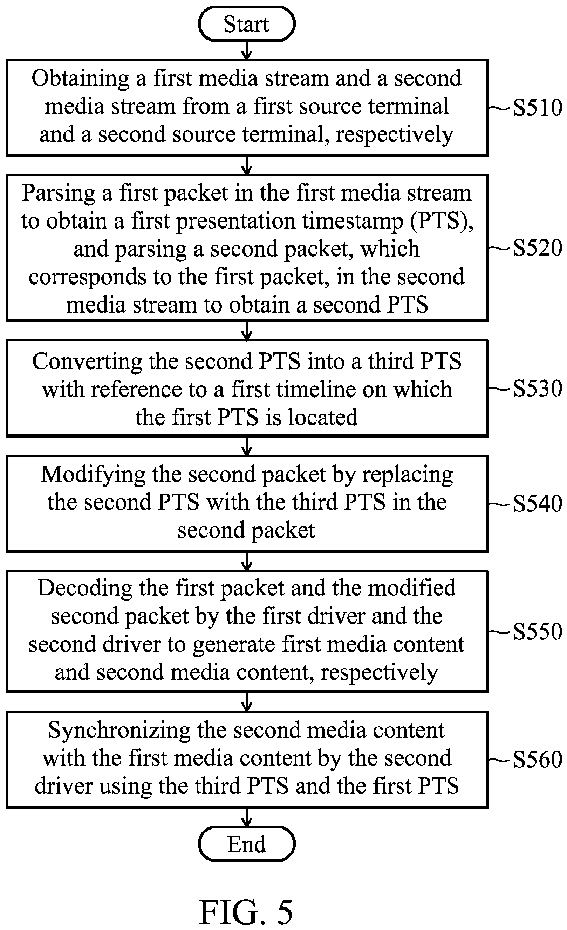

FIG. 5 is a flow chart of a method for synchronizing media streams in accordance with an embodiment of the invention. Please refer to FIG. 1 and FIG. 5.

Step S510: obtaining a first media stream 11 and a second media stream 21 from a first source terminal 10 and a second source terminal 20, respectively. For example, the first media stream 11 and the second media stream 21 are respectively a video stream and an audio stream that belong to MPEG (Motion Picture Expert Group) Transport Streams (TS). In addition, the first source terminal 10 is a broadcast source, and the second source terminal 20 is a broadband source.

Step S520: parsing a first packet in the first media stream to obtain a first presentation timestamp (PTS), and parsing a second packet, that corresponds to the first packet, in the second media stream to obtain a second PTS. For example, the processor 110 obtains the first PTS and the second PTS from a first PTS header of the first packet and a second PTS header of the second packet, respectively.

Step S530: converting the second PTS into a third PTS with reference to a first timeline on which the first PTS is located by the analyzing program 131. For example, the processor 110 converts the second PTS on a second timeline into a first TEMI (Timed External Media Information) on a third timeline, converts the first TEMI into a second TEMI on a fourth timeline, and converts the second TEMI into the third PTS with reference to the first timeline on which the first PTS is located. More details about the aforementioned conversion operations can be referred to embodiments of FIGs. 4A to 4C.

Step S540: modifying the second packet by replacing the second PTS with the third PTS in the second packet to generate a modified second packet by the analyzing program 131. For example, the processor 110 forwards the first packet to a first driver (e.g., video driver 132), and forwarding the modified second packet with the third PTS and the first PTS to a second driver (e.g., audio driver 133). As a result, the timeline of the first PTS of the first packet processed by the video driver 132 and the timeline of the third PTS of the modified second packet processed by the audio driver 133 could align to each other.

Step S550: decoding the first packet and the modified second packet by the first driver and the second driver to generate first media content and second media content, respectively. It should be noted that the decoding latencies of the video driver 132 and the audio driver 133 may be different. Generally, the latency of decoding a video stream is generally higher than that of decoding an audio stream due to higher complexity of the video decoding.

Step S560: synchronizing the second media content with the first media content by the second driver using the third PTS and the first PTS. For example, in response to the second driver (e.g., audio driver 133) determining that the third PTS is ahead of the first PTS by more than a first predetermined amount of units on the first timeline, the second driver waits for a period of time until an actual PTS of the second media content is within a tolerance range of the first PTS. In response to the second driver determining that the third PTS is behind the first PTS by more than a second predetermined amount of units on the first timeline, the second driver skips the modified second packet and fetches the next second packet from the second media stream. In response to the second driver determining that the third PTS is ahead of the first PTS by less than or equal to the first predetermined amount of units on the first timeline or is behind the first PTS by less than or equal to the second predetermined amount of units on the first timeline, the second driver outputs the second media content. In some embodiments, the first predetermined amount is equal to the second predetermined amount. In some other embodiments, the first predetermined amount is different from the second predetermined amount.

In view of the above, a multimedia playback apparatus and a method for synchronizing media streams, which are capable of performing audio/video synchronization using the audio/video driver. For example, the processor can convert the audio PTS from the audio PES packet to another audio PTS with reference to the video PTS timeline, and modify the audio PES packet by replacing the audio PTS with the converted audio PTS. In other words, the converted audio PTS and the video PTS are on the same video PTS timeline before processed by the audio/video driver. Thereafter, the audio driver can obtain the converted audio PTS from the modified audio PES packet, and perform audio/video synchronization using the converted audio PTS and the video PTS directly, without any seeking PTS step which involved the analyzing program 131, thereby achieving higher synchronization accuracy with reduced delay time.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

The steps described herein may be implemented using any suitable controller or processor, and software application, which may be stored on any suitable storage location or computer-readable medium. The software application provides instructions that enable the processor to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The medium may be an electronic, magnetic, optical, electromagnetic, infrared, semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk-read/write (CD-R/W).

**Claims**

1. A multimedia playback apparatus (100), comprising:

   a non-volatile memory (130), storing an analyzing program (131), a first driver (132), and a second driver (133); and
   a processor (110), executing the analyzing program (131), the first driver (132), and the second driver (133) being adapted to perform the following steps:

obtaining Motion Picture Expert Group, MPEG, Transport Streams, TS, comprising a video stream (11) and an audio stream (21) from a first source terminal (10) and a second source terminal (20), respectively; parsing a first packet in the video stream (11) to obtain a first presentation timestamp, PTS, referred to as video PTS, and parsing a second packet, that corresponds to the first packet, in the audio stream (21) to obtain a second PTS, referred to as audio PTS,
wherein the first source terminal (10) is a broadcast source, and the second source terminal (20) is a broadband source;
wherein the processor (110) obtains the video PTS and the audio PTS from a first PTS header of the first packet and a second PTS header of the second packet, respectively,
**characterized by**
the processor (110), executing the analyzing program (131), the first driver (132), and the second driver (133) being further adapted to perform the following steps:

converting the video PTS on the video PTS timeline (z) into a corresponding video Timed External Media Information, TEMI, on a video TEMI timeline (x) with reference to the video PTS timeline (z),
converting the video TEMI into an audio TEMI on an audio TEMI timeline (y), wherein converting the video TEMI into the audio TEMI comprises using additional video and audio TEMI time data and a predefined point of correlation on the video TEMI timeline (x) and the audio TEMI timeline (y), respectively; and
converting the audio TEMI into a corresponding audio PTS, C_APTS, on an audio PTS timeline (w); and to further perform the following steps:

modifying the second packet by replacing the audio PTS with the converted PTS, C_APTS, in the second packet to generate a modified second packet;
decoding the first packet and the modified second packet by the first driver and the second driver to generate video content and audio content, respectively; and
synchronizing the audio content with the video content by the second driver using the converted PTS, C_APTS, and the video PTS.

2. The multimedia playback apparatus (100) as claimed in claim 1, wherein in response to the second driver (133) determining that the converted audio PTS, C_APTS, is ahead of the video PTS by more than a first predetermined amount of units on the video PTS timeline (z), the second driver (133) waits for a period of time until an actual PTS of the audio content is within a tolerance range of the video PTS,

wherein in response to the second driver (133) determining that the converted PTS, C_APTS, is behind the video PTS by more than a second predetermined amount of units on the video PTS timeline (z), the second driver (133) skips the modified second packet and fetches the next second packet from the audio stream (21),
wherein in response to the second driver (133) determining that the converted PTS, C_APTS, is ahead of the video PTS by less than or equal to the first predetermined amount of units on the video PTS timeline (z) or is behind the video PTS by less than or equal to the second predetermined amount of units on the video PTS timeline (z), the second driver (133) outputs the audio content.

3. The multimedia playback apparatus (100) as claimed in the previous claim, wherein the first predetermined amount is equal to the second predetermined amount.

4. A computer-implemented method for synchronizing media streams performed by a multimedia playback apparatus (100), comprising:

a non-volatile memory (130), storing an analyzing program (131), a first driver (132), and a second driver (133); and
a processor (110), executing the analyzing program (131), the first driver (132), and the second driver (133) being adapted to perform the following steps of the method:

obtaining Motion Picture Expert Group, MPEG, Transport Streams, TS, comprising a video stream (11) and an audio stream (21) from a first source terminal (10) and a second source terminal (20), respectively; parsing a first packet in the video stream (11) to obtain a first presentation timestamp, PTS, referred to as video PTS, and parsing a second packet, that corresponds to the first packet, in the audio stream (21) to obtain a second PTS, referred to as audio PTS,

wherein the first source terminal (10) is a broadcast source, and the second source terminal (20) is a broadband source;

wherein the processor (110) obtains the video PTS and the audio PTS from a first PTS header of the first packet and a second PTS header of the second packet, respectively,

**characterized by**

the processor (110), executing the analyzing program (131), the first driver (132), and the second driver (133) being further adapted to perform the following steps:

converting the video PTS on the video PTS timeline (z) into a corresponding video Timed External Media Information, TEMI, on a video TEMI timeline (x) with reference to the video PTS timeline (z), converting the video TEMI into an audio TEMI on an audio TEMI timeline (y), wherein converting the video TEMI into the audio TEMI comprises using additional video and audio TEMI time data and a predefined point of correlation on the video TEMI timeline (x) and the audio TEMI timeline (y), respectively; and

converting the audio TEMI into a corresponding audio PTS, C_APTS, on an audio PTS timeline (w); and to further perform the following steps:

modifying the second packet by replacing the audio PTS with the converted PTS, C_APTS, in the second packet to generate a modified second packet;

decoding the first packet and the modified second packet by the first driver and the second driver to generate video content and audio content, respectively; and

synchronizing the audio content with the video content by the second driver using the converted PTS, C_APTS, and the video PTS.

5.  The method as claimed in claim 4, comprising:
    in response to the second driver (133) determining that the converted audio PTS, C_APTS, is ahead of the video PTS by more than a first predetermined amount of units on the video PTS timeline (z), the second driver (133) waits for a period of time until an actual PTS of the audio content is within a tolerance range of the video PTS,

    wherein in response to the second driver (133) determining that the converted PTS, C_APTS, is behind the video PTS by more than a second predetermined amount of units on the video PTS timeline (z), the second driver (133) skips the modified second packet and fetches the next second packet from the audio stream (21),

    wherein in response to the second driver (133) determining that the converted PTS, C_APTS, is ahead of the video PTS by less than or equal to the first predetermined amount of units on the video PTS timeline (z) or is behind the video PTS by less than or equal to the second predetermined amount of units on the video PTS timeline (z), the second driver (133) outputs the audio content.

6.  The method as claimed in claim 5, wherein the first predetermined amount is equal to the second predetermined amount.

**Patentansprüche**

1.  Multimedia-Wiedergabegerät (100), aufweisend:

    einen nichtflüchtigen Speicher (130), der ein Analyseprogramm (131), einen ersten Treiber (132) und einen zweiten Treiber (133) speichert; und

    einen Prozessor (110), der das Analyseprogramm (131) ausführt, wobei der erste Treiber (132) und der zweite Treiber (133) dazu geeignet sind, die folgenden Schritte auszuführen:

    Erhalten von Motion Picture Expert Group-, MPEG, Transportströmen, TS, die einen Videostrom (11) und einen Audiostrom (21) von einem ersten Quellendgerät (10) bzw. einem zweiten Quellendgerät (20) aufweisen;

    Analysieren eines ersten Pakets im Videostrom (11), um einen ersten Präsentationszeitstempel, PTS, zu erhalten, der als Video-PTS bezeichnet wird, und Analysieren eines zweiten Pakets, das dem ersten Paket entspricht, im Audiostrom (21), um einen zweiten PTS zu erhalten, der als Audio-PTS bezeichnet wird,

9

wobei das erste Quellenendgerät (10) eine Rundfunkquelle ist und das zweite Quellenendgerät (20) eine Breitbandquelle ist;

wobei der Prozessor (110) den Video-PTS und den Audio-PTS aus einem ersten PTS-Header des ersten Pakets bzw. einem zweiten PTS-Header des zweiten Pakets abruft,

**dadurch gekennzeichnet, dass**

der Prozessor (110), der das Analyseprogramm (131) ausführt, der erste Treiber (132) und der zweite Treiber (133) des Weiteren dazu geeignet sind, die folgenden Schritte auszuführen:

Umwandeln des Video-PTS auf der Video-PTS-Zeitachse (z) in eine entsprechende Video-Timed External Media Information, TEMI, auf einer Video-TEMI-Zeitachse (x) unter Bezugnahme auf die Video-PTS-Zeitachse (z),

Umwandeln der Video-TEMI in eine Audio-TEMI auf einer Audio-TEMI-Zeitlinie (y), wobei das Umwandeln der Video-TEMI in die Audio-TEMI die Verwendung zusätzlicher Video- und Audio-TEMI-Zeitdaten und eines vordefinierten Korrelationspunktes auf der Video-TEMI-Zeitlinie (x) bzw. der Audio-TEMI-Zeitlinie (y) aufweist; und

Umwandeln der Audio-TEMI in einen entsprechenden Audio-PTS, C_APTS, auf einer Audio-PTS-Zeitachse (w);

und um des Weiteren die folgenden Schritte auszuführen:

Modifizieren des zweiten Pakets durch Ersetzen des Audio-PTS durch den konvertierten PTS, C_APTS, im zweiten Paket, um ein modifiziertes zweites Paket zu erzeugen;

Dekodieren des ersten Pakets und des modifizierten zweiten Pakets durch den ersten Treiber und den zweiten Treiber, um Videoinhalte bzw. Audioinhalte zu erzeugen; und

Synchronisieren des Audioinhalts mit dem Videoinhalt durch den zweiten Treiber unter Verwendung des konvertierten PTS, C_APTS und des Video-PTS.

2. Multimedia-Wiedergabegerät (100) nach Anspruch 1, bei dem als Reaktion darauf, dass der zweite Treiber (133) feststellt, dass der konvertierte Audio-PTS, C_APTS, dem Video-PTS um mehr als eine erste vorbestimmte Anzahl von Einheiten auf der Video-PTS-Zeitachse (z) voraus ist, der zweite Treiber (133) eine Zeitspanne lang wartet, bis ein tatsächlicher PTS des Audioinhalts innerhalb eines Toleranzbereichs des Video-PTS liegt,

wobei als Reaktion darauf, dass der zweite Treiber (133) feststellt, dass der umgewandelte PTS, C_APTS, um mehr als eine zweite vorbestimmte Anzahl von Einheiten auf der Video-PTS-Zeitachse (z) hinter dem Video-PTS liegt, der zweite Treiber (133) das modifizierte zweite Paket überspringt und das nächste zweite Paket aus dem Audiostrom (21) abruft,

wobei als Reaktion darauf, dass der zweite Treiber (133) feststellt, dass der umgewandelte PTS, C_APTS, dem Video-PTS um weniger als oder gleich der ersten vorbestimmten Anzahl von Einheiten auf der Video-PTS-Zeitlinie (z) voraus ist oder hinter dem Video-PTS um weniger als oder gleich der zweiten vorbestimmten Anzahl von Einheiten auf der Video-PTS-Zeitlinie (z) zurückliegt, der zweite Treiber (133) den Audioinhalt ausgibt.

3. Multimedia-Wiedergabegerät (100) nach dem vorhergehenden Anspruch, bei dem die erste vorbestimmte Anzahl gleich der zweiten vorbestimmten Anzahl ist.

4. Computerimplementiertes Verfahren zum Synchronisieren von Medienströmen, das von einem Multimedia-Wiedergabegerät (100) ausgeführt wird, aufweisend:

einen nichtflüchtigen Speicher (130), der ein Analyseprogramm (131), einen ersten Treiber (132) und einen zweiten Treiber (133) speichert; und

einen Prozessor (110), der das Analyseprogramm (131) ausführt, wobei der erste Treiber (132) und der zweite Treiber (133) geeignet sind, die folgenden Schritte des Verfahrens durchzuführen:

Erhalten von Motion Picture Expert Group-, MPEG, Transportströmen, TS, die einen Videostrom (11) und einen Audiostrom (21) von einem ersten Quellendgerät (10) bzw. einem zweiten Quellendgerät (20) aufweisen;

Analysieren eines ersten Pakets im Videostrom (11), um einen ersten Präsentationszeitstempel, PTS, zu erhalten, der als Video-PTS bezeichnet wird, und Analysieren eines zweiten Pakets, das dem ersten Paket entspricht, im Audiostrom (21), um einen zweiten PTS zu erhalten, der als Audio-PTS bezeichnet wird,

wobei das erste Quellenendgerät (10) eine Rundfunkquelle ist und das zweite Quellenendgerät (20) eine Breitbandquelle ist;

wobei der Prozessor (110) den Video-PTS und den Audio-PTS aus einem ersten PTS-Header des ersten Pakets bzw. einem zweiten PTS-Header des zweiten Pakets abruft,

**dadurch gekennzeichnet, dass**

der Prozessor (110), der das Analyseprogramm (131) ausführt, der erste Treiber (132) und der zweite Treiber (133) des Weiteren dazu geeignet sind, die folgenden Schritte auszuführen:

Umwandeln des Video-PTS auf der Video-PTS-Zeitachse (z) in eine entsprechende Video-Timed External Media Information, TEMI, auf einer Video-TEMI-Zeitachse (x) unter Bezugnahme auf die Video-PTS-Zeitachse (z),

Umwandeln der Video-TEMI in eine Audio-TEMI auf einer Audio-TEMI-Zeitlinie (y), wobei das Umwandeln der Video-TEMI in die Audio-TEMI die Verwendung zusätzlicher Video- und Audio-TEMI-Zeitdaten und eines vordefinierten Korrelationspunktes auf der Video-TEMI-Zeitlinie (x) bzw. der Audio-TEMI-Zeitlinie (y) aufweist; und

Umwandeln der Audio-TEMI in einen entsprechenden Audio-PTS, C_APTS, auf einer Audio-PTS-Zeitachse (w);

und um des Weiteren die folgenden Schritte auszuführen:

Modifizieren des zweiten Pakets durch Ersetzen des Audio-PTS durch den konvertierten PTS, C_APTS, im zweiten Paket, um ein modifiziertes zweites Paket zu erzeugen;

Dekodieren des ersten Pakets und des modifizierten zweiten Pakets durch den ersten Treiber und den zweiten Treiber, um Videoinhalte bzw. Audioinhalte zu erzeugen; und

Synchronisieren des Audioinhalts mit dem Videoinhalt durch den zweiten Treiber unter Verwendung des konvertierten PTS, C_APTS und des Video-PTS.

5.  Verfahren nach Anspruch 4, aufweisend:

als Reaktion darauf, dass der zweite Treiber (133) feststellt, dass der konvertierte Audio-PTS, C_APTS, dem Video-PTS um mehr als eine erste vorbestimmte Anzahl von Einheiten auf der Video-PTS-Zeitachse (z) voraus ist, der zweite Treiber (133) eine Zeit lang wartet, bis ein tatsächlicher PTS des Audioinhalts innerhalb eines Toleranzbereichs des Video-PTS liegt,

wobei als Reaktion darauf, dass der zweite Treiber (133) feststellt, dass der umgewandelte PTS, C_APTS, um mehr als eine zweite vorbestimmte Anzahl von Einheiten auf der Video-PTS-Zeitachse (z) hinter dem Video-PTS liegt, der zweite Treiber (133) das modifizierte zweite Paket überspringt und das nächste zweite Paket aus dem Audiostrom (21) abruft,

wobei als Reaktion darauf, dass der zweite Treiber (133) feststellt, dass der umgewandelte PTS, C_APTS, dem Video-PTS um weniger als oder gleich der ersten vorbestimmten Anzahl von Einheiten auf der Video-PTS-Zeitlinie (z) voraus ist oder hinter dem Video-PTS um weniger als oder gleich der zweiten vorbestimmten Anzahl von Einheiten auf der Video-PTS-Zeitlinie (z) liegt, der zweite Treiber (133) den Audioinhalt ausgibt.

6.  Verfahren nach Anspruch 5, bei dem die erste vorbestimmte Anzahl gleich der zweiten vorbestimmten Anzahl ist.

## Revendications

1.  Dispositif de lecture multimédia (100), comprenant:

une mémoire non volatile (130) qui stocke un programme d'analyse (131), un premier pilote (132) et un second pilote (133); et

un processeur (110) qui exécute le programme d'analyse (131), le premier pilote (132) et le deuxième pilote (133) étant adaptés pour exécuter les étapes suivantes:

obtenir des flux de transport Motion Picture Expert Group, MPEG, TS, comprenant un flux vidéo (11) et un flux audio (21) provenant respectivement d'un premier terminal source (10) et d'un second terminal source (20);

analyser un premier paquet dans le flux vidéo (11) pour obtenir un premier timbre de présentation, PTS, appelé PTS vidéo, et analyser un second paquet correspondant au premier paquet dans le flux audio (21) pour obtenir un second PTS, appelé PTS audio,

dans lequel le premier terminal source (10) est une source de diffusion et le second terminal source (20) est une source à large bande;
dans lequel le processeur (110) extrait le PTS vidéo et le PTS audio respectivement d'un premier en-tête PTS du premier paquet et d'un deuxième en-tête PTS du deuxième paquet, **caractérisé en ce que** le processeur (110) qui exécute le programme d'analyse (131), le premier pilote (132) et le second pilote (133) sont en outre adaptés pour exécuter les étapes suivantes:

convertir le PTS vidéo sur l'axe temporel du PTS vidéo (z) en une information de média externe en temps réel vidéo correspondante, TEMI, sur un axe temporel du TEMI vidéo (x) en se référant à l'axe temporel du PTS vidéo (z),
convertir la TEMI vidéo en une TEMI audio sur une ligne de temps TEMI audio (y), la conversion de la TEMI vidéo en la TEMI audio comprenant l'utilisation de données de temps TEMI vidéo et audio supplémentaires et d'un point de corrélation prédéfini sur la ligne de temps TEMI vidéo (x) et la ligne de temps TEMI audio (y), respectivement; et
convertir le TEMI audio en un PTS audio correspondant, C_APTS, sur un axe temporel de PTS audio (w);
et pour effectuer les étapes suivantes:

modifier le deuxième paquet en remplaçant le PTS audio par le PTS converti, C_APTS, dans le deuxième paquet pour créer un deuxième paquet modifié;
décoder le premier paquet et le deuxième paquet modifié par le premier pilote et le deuxième pilote pour produire respectivement un contenu vidéo et un contenu audio; et
synchroniser le contenu audio avec le contenu vidéo par le deuxième pilote en utilisant le PTS converti, C_APTS et le PTS vidéo.

2. Dispositif de lecture multimédia (100) selon la revendication 1, dans lequel, en réponse au fait que le deuxième pilote (133) détermine que le PTS audio converti, C_APTS, est en avance sur le PTS vidéo de plus d'un premier nombre prédéterminé d'unités sur l'axe temporel du PTS vidéo (z), le deuxième pilote (133) attend pendant une période de temps jusqu'à ce qu'un PTS réel du contenu audio soit dans une plage de tolérance du PTS vidéo,

dans lequel, en réponse au fait que le second pilote (133) détermine que le PTS converti, C_APTS, est en retard par rapport au PTS vidéo de plus d'un second nombre prédéterminé d'unités sur l'axe temporel PTS vidéo (z), le second pilote (133) saute le second paquet modifié et récupère le second paquet suivant à partir du flux audio (21),
dans lequel, en réponse au fait que le second pilote (133) détermine que le PTS converti, C_APTS, est en avance sur le PTS vidéo d'un nombre inférieur ou égal au premier nombre prédéterminé d'unités sur la ligne de temps PTS vidéo (z) ou en retard sur le PTS vidéo d'un nombre inférieur ou égal au second nombre prédéterminé d'unités sur la ligne de temps PTS vidéo (z), le second pilote (133) délivre le contenu audio.

3. Dispositif de lecture multimédia (100) selon la revendication précédente, dans lequel le premier nombre prédéterminé est égal au deuxième nombre prédéterminé.

4. Procédé mis en oeuvre par ordinateur pour synchroniser des flux de médias, exécuté par un dispositif de lecture multimédia (100), comprenant:

une mémoire non volatile (130) qui stocke un programme d'analyse (131), un premier pilote (132) et un second pilote (133); et
un processeur (110) qui exécute le programme d'analyse (131), le premier pilote (132) et le deuxième pilote (133) étant adaptés pour exécuter les étapes suivantes du procédé:

obtenir des flux de transport Motion Picture Expert Group, MPEG, TS, comprenant un flux vidéo (11) et un flux audio (21) provenant respectivement d'un premier terminal source (10) et d'un second terminal source (20);
analyser un premier paquet dans le flux vidéo (11) pour obtenir un premier timbre de présentation, PTS, appelé PTS vidéo, et analyser un second paquet correspondant au premier paquet dans le flux audio (21) pour obtenir un second PTS, appelé PTS audio,
dans lequel le premier terminal source (10) est une source de diffusion et le second terminal source (20) est une source à large bande;
dans lequel le processeur (110) extrait le PTS vidéo et le PTS audio respectivement d'un premier en-tête PTS du premier paquet et d'un deuxième en-tête PTS du deuxième paquet, **caractérisé en ce que**

le processeur (110) qui exécute le programme d'analyse (131), le premier pilote (132) et le second pilote (133) sont en outre adaptés pour exécuter les étapes suivantes:

convertir le PTS vidéo sur l'axe temporel de PTS vidéo (z) en une information de média externe en temps réel vidéo, TEMI, correspondante sur un axe temporel de TEMI vidéo (x) en se référant à l'axe temporel de PTS vidéo (z),

convertir la TEMI vidéo en une TEMI audio sur une ligne de temps TEMI audio (y), la conversion de la TEMI vidéo en la TEMI audio comprenant l'utilisation de données de temps TEMI vidéo et audio supplémentaires et d'un point de corrélation prédéfini sur la ligne de temps TEMI vidéo (x) et la ligne de temps TEMI audio (y), respectivement; et

convertir le TEMI audio en un PTS audio correspondant, C_APTS, sur un axe temporel de PTS audio (w);

et pour effectuer les étapes suivantes:

modifier le deuxième paquet en remplaçant le PTS audio par le PTS converti, C_APTS, dans le deuxième paquet pour créer un deuxième paquet modifié;

décoder le premier paquet et le deuxième paquet modifié par le premier pilote et le deuxième pilote pour produire respectivement un contenu vidéo et un contenu audio; et

synchroniser le contenu audio avec le contenu vidéo par le deuxième pilote en utilisant le PTS converti, C_APTS et le PTS vidéo.

5. Procédé selon la revendication 4, comprenant:

en réponse au fait que le second pilote (133) détermine que le PTS audio converti, C_APTS, est en avance sur le PTS vidéo de plus d'un premier nombre prédéterminé d'unités sur l'axe temporel de PTS vidéo (z), le second pilote (133) attend pendant un certain temps jusqu'à ce qu'un PTS réel du contenu audio soit dans une plage de tolérance du PTS vidéo,

dans lequel, en réponse au fait que le second pilote (133) détermine que le PTS converti, C_APTS, est en retard par rapport au PTS vidéo de plus d'un second nombre prédéterminé d'unités sur l'axe temporel PTS vidéo (z), le second pilote (133) saute le second paquet modifié et récupère le second paquet suivant à partir du flux audio (21),

dans lequel, en réponse au fait que le second pilote (133) détermine que le PTS converti, C_APTS, est en avance sur le PTS vidéo de moins ou égal au premier nombre prédéterminé d'unités sur la ligne de temps PTS vidéo (z) ou est en retard sur le PTS vidéo de moins ou égal au second nombre prédéterminé d'unités sur la ligne de temps PTS vidéo (z), le second pilote (133) délivre le contenu audio.

6. Procédé selon la revendication 5, dans lequel le premier nombre prédéterminé est égal au deuxième nombre prédéterminé.

FIG. 1

FIG. 2

EP 4 195 673 B1

FIG. 3

EP 4 195 673 B1

FIG. 4A

EP 4 195 673 B1

EP 4 195 673 B1

point of correlation

V_TEMI$_0$ ⟶ timeline x

V_TEMI$_i$

A_TEMI$_0$ ⟶ timeline y

A_TEMI$_i$

n seconds

FIG. 4B

$A\_TEMI_0$ | $A\_TEMI_1$ | $A\_TEMI_2$ | $A\_TEMI_3$ → timeline y (A_TEMI)

$A\_PTS_0$ | $A\_PTS_1$ | $A\_PTS_2$ | $A\_PTS_3$ → timeline w (A_PTS)

FIG. 4C

Start

| Obtaining a first media stream and a second media stream from a first source terminal and a second source terminal, respectively | ~S510 |

| Parsing a first packet in the first media stream to obtain a first presentation timestamp (PTS), and parsing a second packet, which corresponds to the first packet, in the second media stream to obtain a second PTS | ~S520 |

| Converting the second PTS into a third PTS with reference to a first timeline on which the first PTS is located | ~S530 |

| Modifying the second packet by replacing the second PTS with the third PTS in the second packet | ~S540 |

| Decoding the first packet and the modified second packet by the first driver and the second driver to generate first media content and second media content, respectively | ~S550 |

| Synchronizing the second media content with the first media content by the second driver using the third PTS and the first PTS | ~S560 |

End

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021235135 A1

- WO 2008055420 A1

**Non-patent literature cited in the description**

- **BORONAT FERNANDO et al.** HbbTV-Compliant 1-14 Platform for Hybrid Media Delivery and Synchronization on Single- and Multi-Device Scenarios. *IEEE TRANSACTIONS ON BROADCASTING, IEEE SERVICE CENTER, PISCATAWAY, NJ, US*, 01 September 2018, vol. 64, 721-746